# EUROPEAN PATENT APPLICATION

(11) **EP 2 109 151 A1**
(43) Date of publication of application: **14.10.2009**
(21) Application number: 08425341.8
(22) Date of filing: 15.05.2008
(51) Int. Cl.: H01L 31/042

(54) **Sun-tracking photovoltaic apparatus**

(30) Priority: 07.04.2008 EP 08425227
(71) Applicant: Costantino Ferdinado Ponziano C.E.M. S.r.l., 71100 Foggia (FG) (IT)
(72) Inventor: Costantino Ferdinado Ponziano C.E.M. S.r.l., 71100 Foggia (FG) (IT)
(74) Representative: Germinario, Claudio

(57) **Abstract**

The present invention refers to a sun-tracking photovoltaic apparatus. The solar tracker (or sun follower) according to the present invention has a weight and an off-ground height remarkably lower with respect to other followers (trackers) known in the current state of the art, entailing greater ease of installation and a reduced environmental impact, in conjunction with reasonable costs.

## Description

The present invention refers to a sun-tracking photovoltaic apparatus; therefore, it finds application in the field of the exploitation of clean energy sources.

As it is widely known in the current state of the art, a sun follower is a mechanical device apt to favourably orient towards rays of the sun a frame on which one or more solar panels for thermal or photovoltaic use are positioned. The plane on which the device is anchored is generally referred to as "land surface".

The main aim of such a device is to maximize the energy conversion efficiency of solar panels mounted thereon.

Usually, in the photovoltaic field the panels moved by the device are mounted on a single frame, so as to avoid the use of one sun follower for each individual panel.

Sun constitutes a spherical energy source producing a radial beam of rays; yet, since it lies at a great distance from the panels, it may be assumed that the rays impinging on the latter are substantially parallel thereamong. Hence, the longer the sun rays remain perpendicular with respect to the panels, the greater, accordingly, the energy produced in the conversion process.

As it is known, the great circle of the celestial sphere traced out by the sun in its apparent path around Earth during the year is defined as "ecliptic". The geometrical plane onto which the ecliptic lies is referred to as "ecliptic plane". Hence, in order to attain maximum efficiency in sun ray absorption, the panel should be positioned perpendicularly to the ecliptic plane all year long, and moreover it should carry out the Sun following in the East-West direction, due to the Earth's daily rotation about its own axis.

To date, known solar trackers substantially differentiate into two typologies: single-axis sun followers and dual-axis solar sun followers having a "sail".

A single-axis follower operates, as to the alignment of the frame to the ecliptic plane, on the basis of the principle of availability of a fixed or manually variable angle, whereas the Sun following in the East-West direction is automated by means of a motor.

A "sail" dual-axis sun follower instead follows the Sun through an East-West tracking system obtained by rotating the follower about a longitudinal axis perpendicular to the land surface, whereas the panel plane rotates, on a transversal axis, of an angle positioning it perpendicularly to the ecliptic plane.

Both of the above-highlighted known solutions entail advantages as well as drawbacks with respect to each other.

In particular, single-axis followers entail lower costs, but are characterised by a low efficiency increase value with respect to fixed-configuration panels.

On the other hand, dual-axis followers exhibit a high value of efficiency increase with respect to fixed configurations, yet are affected by several evident drawbacks.

In fact, in dual-axis followers the structure weight, generally no lower than 400 kg, is concentrated on a rather small surface. This feature does not allow the use of this type of followers on existing roofs and floors, or on cantilever roofs, as generally such a concentrated load cannot be placed on existing floors that, by law, allow for a maximum accidental overload lower than the minimum weight of the structure of such a follower.

Photovoltaic panels, in the near-totality of cases, are mounted on a support frame, referred to as "sail", continuously and leaving no gap thereamong. Thus, there are achieved equivalent dimensions of a single panel, with a surface that may range from a minimum of 12 sq m to (currently) a maximum of 130 sq m. Under normal operating conditions, at its apex the sail dual-axis follower rises above land surface from a minimum of 4 m to a maximum of 12 m.

As it will surely be appreciated by a person skilled in the art, an exposed surface of from 12 to 130 sq m has a wind lift comparable to that of a nautical sail. Lift generated by the presence of winds, even weak ones, forces the tracking system of the follower to position the panel plane horizontally, thereby losing the option of increasing its efficiency with respect to a fixed-type system.

Moreover, the large exposed surface, a peculiar feature of the sail dual-axis follower, constitutes a non-negligible obstacle during the phase of issuance, by the competent body, of authorizations to install them. Undeniably, such a sun follower has an extremely negative impact on the rural and landscape system, as sails' visibility and their on-field (photovoltaic field) distribution can in no way be minimised due to their off-ground height from the land surface. Accordingly, the environmental impact assessment (EIA) that is to be issued by the competent bodies is very often refused.

Finally, each sail dual-axis follower in order to avoid shading should necessarily occupy a minimum surface (based on ground orography) equal to at least thrice the value of the sail surface, i.e., from a minimum of 36 sq m to a maximum of about 400 sq m per individual follower. Therefore, it is necessary to arrange followers in a spotty configuration.

An at least partial solution to some of the problems of the known art comes from the apparatus described and claimed in EP Application N° 08425227.9 to the same Applicant, the priority of which is claimed and hereby incorporated by reference in its entirety.

In that Application, it is described and claimed a "plane" biaxial sun follower
characterised in that it can orient the solar panels (individually or in groups) along two directions incident therebetween. Thus, it is avoided the need to raise the "sail" in order to tilt it with respect to the land surface, as occurred for apparatus known up to then.

However, even said last apparatus entails some technical drawbacks. In particular, it requires greater manufacturing complexity, and therefore higher costs and a more assiduous and accurate maintenance.

Hence, it also was subjected to a study and an improvement, leading to the making of a follower that, though based on the same principle (plane biaxial follower), was modified in the moving in order to attain a mechanically simpler device, capable of producing at least the same technical effects and therefore, as a consequence, specifically more efficient.

Object of the present invention is to obviate the drawbacks mentioned above with reference to the known art, by providing an apparatus as substantially described in claim 1.

Secondary features of the present invention are instead defined in the respective dependent claims.

The present invention, by overcoming the mentioned problems of the known art, entails several evident advantages.

First of all, the greater mechanical simplicity has as consequence a + 30 to 45% efficiency increase in the transformation of the electric power generated, with respect to a fixed-type system and also to a traditional dual-axis follower.

Moreover, the weight of the structure (minimum weight: 220 kg, panels not included) is always split among at least four points, set at a minimum distance of 1.5 m to each other. In a roof installation configuration, the maximum concentrated load discharged onto the floor is of 120 kg/sq m over an overall surface of about 4 sq m. The average distributed load is equal to 300 kg/4 sq m=75 kg/sq m. The modest weight allows the use of these followers on existing roofs and floors, as well as on cantilever roofs. In fact, the weight of the follower (tracker) amply falls within the values of maximum accidental overload allowed for by the existing law for floors, terraces and roofs.

Furthermore, its greater mechanical and constructive simplicity lowers also its production and maintenance costs.

An additional yet relevant advantage of such a follower with respect to all known art lies in that the arrangement of the panels is such that, under the most unfavourable wind condition, the exposed surface has reduced dimensions. Under normal operating conditions, at its apex the dual-axis circular plane follower according to the present invention, with respect to known apparatuses, rises much less above land surface.

There follows that the structure has an extremely reduced wind lift per panel. The lift, generated by the presence also of average and average to strong winds (90 km/h) induces a dynamic load increase that may be calculated of about 50 kg with 90 km/h winds. From a static standpoint, this accidental overload is amply absorbed by the supports of the panel support frame, the lattice structure and the base. From a dynamic standpoint of forces into play, the actuators used have a rating capable of easily absorbing induced accidental loads. For this reason, the dual-axis circular plane follower system operates correctly even with 90 km/h average-strong winds, without losing the efficiency increase ability in transforming the generated electric power.

The small exposed surface and, above all, the modest off-ground height (max 100 cm above land surface), a peculiar feature of the dual-axis circular plane follower type, constitute no obstacle during the phase of issuance of authorizations required for their installation. In fact, these followers are in all equivalent to fixed-type systems (without follower), both for geometric characteristics, occupied surfaces and height of the panels off the land surface. The environmental impact assessment (EIA) to be issued by competent bodies can be refused only owing to circumstances out of one's control, not depending on the geometric features of the system. The impact of the followers made according to the present invention on the rural and landscape system is modest and in all equivalent to that of a fixed system.

Yet a further advantage of the present invention lies in that the kinematic features are such as to optimise the arrangement of the panels in order to maximize space occupation and concomitantly prevent shading. To prevent shading, the dual-axis circular plane follower should necessarily occupy a minimum surface (on the basis of ground orography) of at least twice the value of the surface of the installed panels. The follower according to the present invention is structured so as to have no shading with a free surface equal to the surface occupied by the panels. This advantage is attained by leaving between the ordinate beams a distance equal to 1.5 times the smaller dimension of the panel that is to be mounted.

Moreover, generally for its installation in-country or on a roof/plane floor the dual-axis circular plane follower needs no additional fixed structure. It may be installed in-country, at least when on a plane surface, with no ground anchoring.

Other advantages, features and the operation modes of the present invention will be made apparent from the following detailed description of a preferred embodiment thereof, given by way of example and not for limitative purposes. Reference will be made to the figures of the annexed drawings, wherein:
figure 1 is an overall perspective view of a sun follower according to the present invention;
figure 2 shows the structure of the follower of figure 1, not including the solar panels;
figure 3 shows more in detail the mechanical structure of a follower according to the present invention;
figure 4 is a detail of the structure, related to the mechanisms for connecting and
moving the solar panels along a first axis;
figures 5 and 6 show more clearly the details of the mechanisms of figure 4;
figure 7 is a schematic view of the load-bearing main structure with the mechanisms of rotation about a second axis;
figure 8 is a detail of figure 6;
figure 9 is a detail of figure 7, showing in detail the implementation of the sliding system; and
figures 10 and 11 show two possible distributions of followers according to the present invention.

The present invention will hereinafter be described making reference to the above-indicated figures.

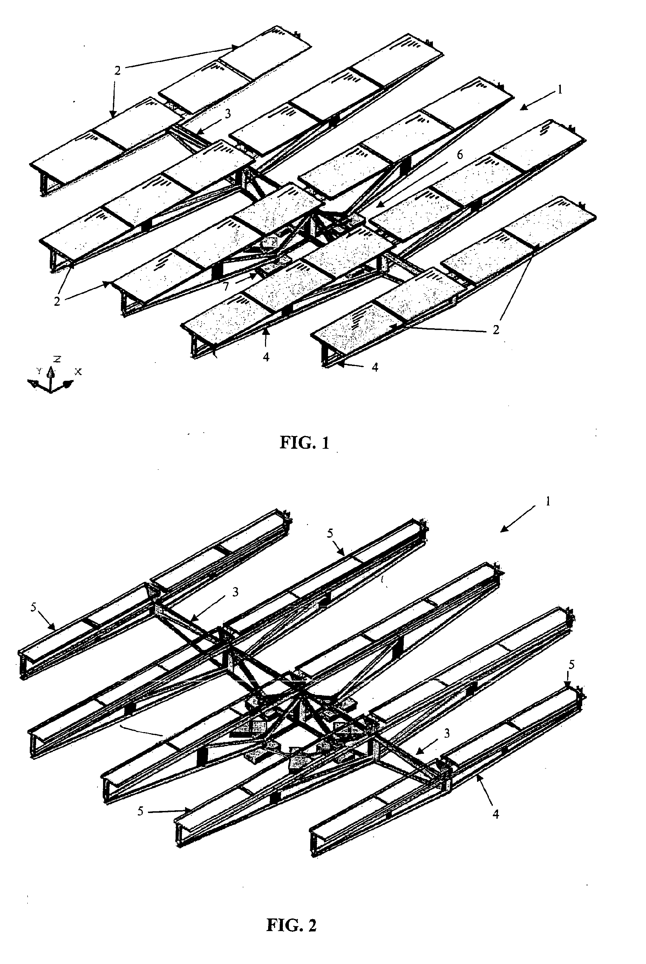

First of all, reference is made to figures 1 and 2. Figure 1 is a perspective view of an apparatus according to a preferred embodiment of the present invention.

In particular, a follower apparatus according to the present invention comprises a load-bearing main structure 1, preferably made in the form of a lattice, supporting the set of photovoltaic panels 2. Figure 2 shows more clearly the load-bearing main structure.

The load-bearing main structure 1 provides a first longitudinal beam 3, for simplicity's sake in the description defined and hereinafter referred to as "main beam". The main beam 3, in the embodiment exemplified herein, is preferably made as a trellis structure for improved resistance to stresses.

Of course, in different embodiments, or for dimensioning issues, it is however possible to provide the presence of more than one main beam.

Along a direction substantially transversal to that of the main beam 3, it is provided the presence of one or more transverse beams 4, for simplicity's sake in the description defined and hereinafter referred to as "ordinate beams". According to the preferred embodiment, however described herein by way of example, there are provided five ordinate beams 4, transversally mounted onto the main beam and substantially equispaced thereamong.

The length of the ordinate beams and their arrangement is such that, on a plan, the structure assumes overall a substantially circular shape. Therefore, the length of the ordinate beams will be decreasing, going from the centre to the ends of the main beam on which they are mounted.

Preferably, also the ordinate beams 4 are made as trellis structures for improved resistance to stresses.

Both the main beam 3 and the ordinate beams 4 are preferably made of metal.

On each of the ordinate beams there are movably mounted the support frames 5 for the solar panels 2. Hereinafter said movable connection will be detailed.

Hence, on each one of the ordinate beams there finds place a respective string of solar panels 2.

The entire load-bearing main structure 1 is in turn movably mounted on a base, generally denoted by number 6, lying on the land surface.

Said base comprises one or more ground supporting members 7. In the preferred embodiment a plurality of such supporting members 7 is provided, in particular eight members, radially arranged along a circumference. The supporting members 7 are preferably made of inert material, like e.g. concrete, and advantageously may comprise means for their anchoring to the ground or underlying structures.

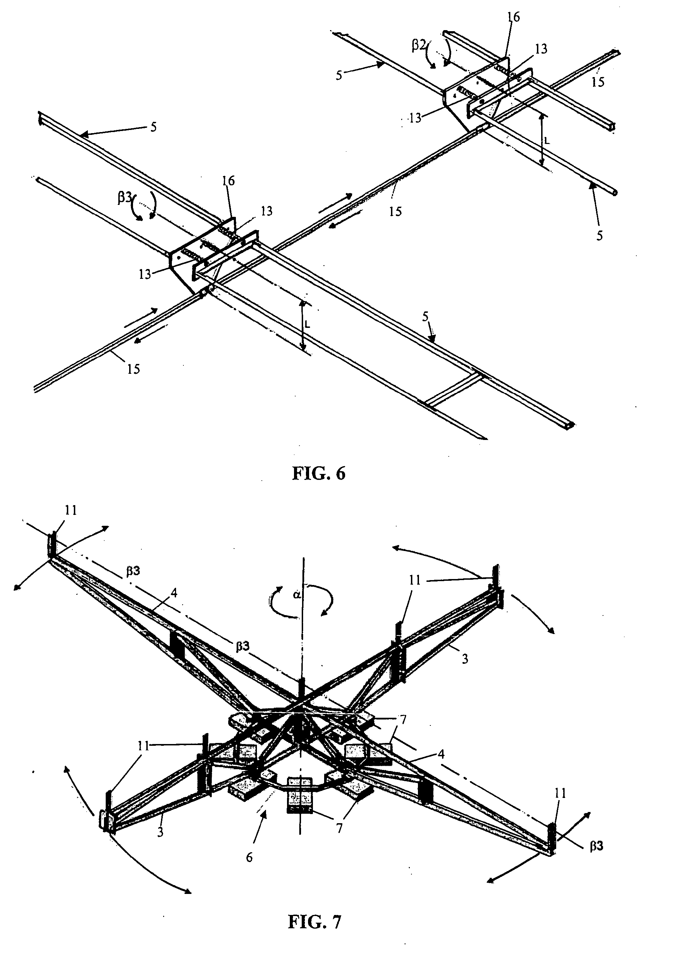

The ordinate beams behave as beams restrained in the middle and free at the ends. The main beam and the central ordinate beam behave as a beam resting-resting with the two ends free (see figure 7). The overall structure behaves as an elastic frame resting on a plurality of distinct points, whose deformations are absorbed by connecting members interposed between the structure and the base itself.

The lattice constitution provides adequate rigidity to the structure, both on the horizontal plane and the vertical plane, so as to contain deformations, both at the ends and in the middle of the individual beams, due to own weight and accidental overloads (wind and snow), under static conditions as well as dynamic ones during its motion.

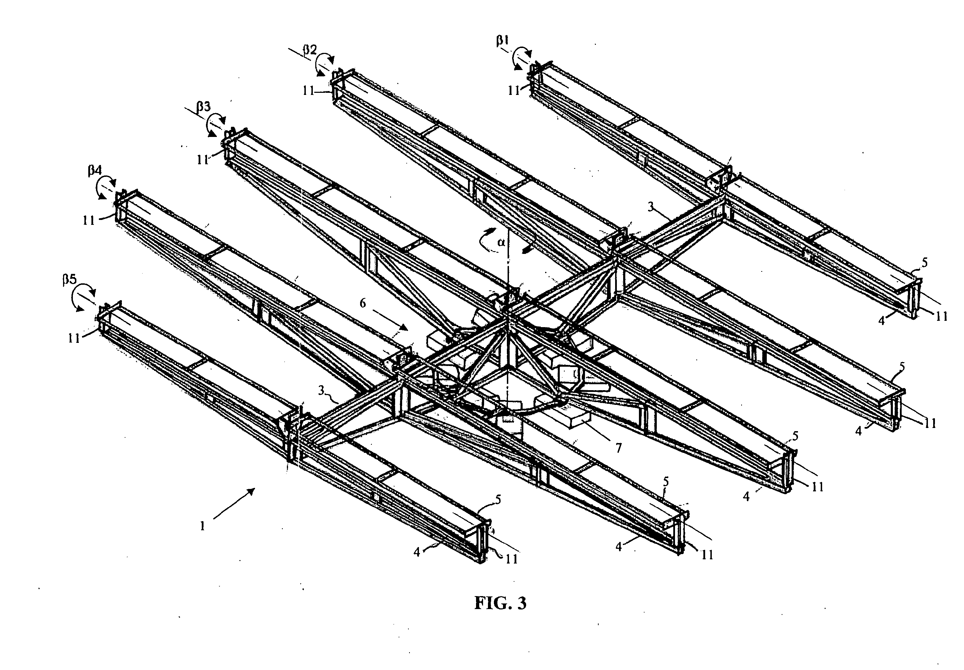

Referring to figure 3, the follower according to the present invention is a mechanical apparatus comprising two kinematic subsystems implementing corresponding rotary motions along axes of rotation different and tilted therebetween. Preferably, such tilt is substantially equal to 90° and therefore the two axes of rotation are orthogonal therebetween.

In particular, a first subsystem, which for simplicity's sake in the description we define as "transverse kinematic motion" comprises first moving means allowing a first motion of the individual strings of solar panels, with respect to the load-bearing structure 1.

In particular, on each ordinate beam, the respective string of solar panels is mounted so that the respective support frames may rotate about a transversal axis, substantially parallel to the ordinate beam itself. In figure 3, such axes of rotation are denoted, for the individual ordinate beams, as β1, β2, β3, β4, β5.

A second subsystem, which for simplicity's sake in the description we define as "circular kinematic motion" comprises second moving means allowing a second motion of the entire load-bearing structure 1 with respect to the base 6.

In particular, the structure can rotate about an axis α, substantially vertical (substantially orthogonal to the land surface) and passing through the centre of gravity of the main beam.

On each ordinate beam of the metal structure, there are integrally fixed two or more columns 11, which, in pairs, support respective support frames 5 for the solar panels, whose assembly forms the string.

The first moving means provides that at the top of each of each column 11 there be positioned a bearing, e.g. a ball bearing, holding a corresponding shaft 12 integral to a respective panel support frame 5.

Thus, each panel support frame 5, and more generally each string made of one or more frames interconnected thereamong, may rotate about an axis β1, β2, β3, β4, β5, substantially parallel to the corresponding ordinate beam.

However, it is understood that the shafts 12 around which the panel support frames rotate, and which then define the axes of rotation β1, β2, β3, β4, β5, can be mounted both in a horizontal position and in a vertical one, or tilted with respect to the land surface on which the base rests.

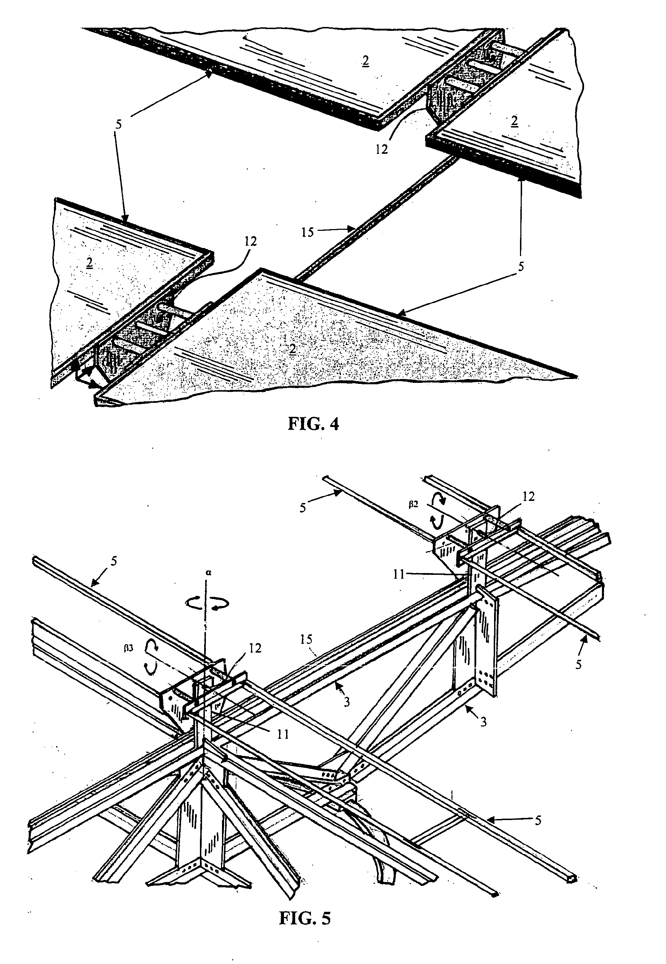

Figures 4, 5 and 6, show in more detail the specifics of the transverse kinematic motion.

All frames 5 of each string are rigidly connected thereamong, e.g. by means of pairs of pins 13, so that the relative orientation of the panels of a same string is predetermined. According to the preferred embodiment, all panels are oriented exactly the same way.

The first moving means further comprises a linkage system 15, 16 that, operated, allows to concomitantly rotate all strings of the structure about the respective axes β1, β2, β3, β4, β5.

This linkage system comprises, e.g., a bar 15 traversing the entire structure along a longitudinal direction and that can slide along said direction, in both senses.

At each ordinate beam, a connecting plate 16 is made integral to the group of panel support frames and the bar 15 is rotatably connected to the plate 16, at a predetermined distance L from the corresponding transversal axis of rotation β1, β2, β3, β4, β5, thereby determining a lever arm.

The first moving means further comprises a first actuator, e.g. a rotative or linear AC or DC electric motor, integrally connected to the load-bearing structure that, connected to the bar 15, controls the sliding thereof along the longitudinal direction. The bar, by sliding, insists on the connecting plates 16, determining a torque and therefore the rotation of each group (string) of panel support frames about the respective axis of rotation β1, β2, β3, β4, β5.

Therefore, the transverse kinematic motion connects thereamong all panel support frames and imposes thereto a rotation that, preferably, may range from + 60° to - 60°, about their longitudinal axis β1, β2, β3, β4, β5.

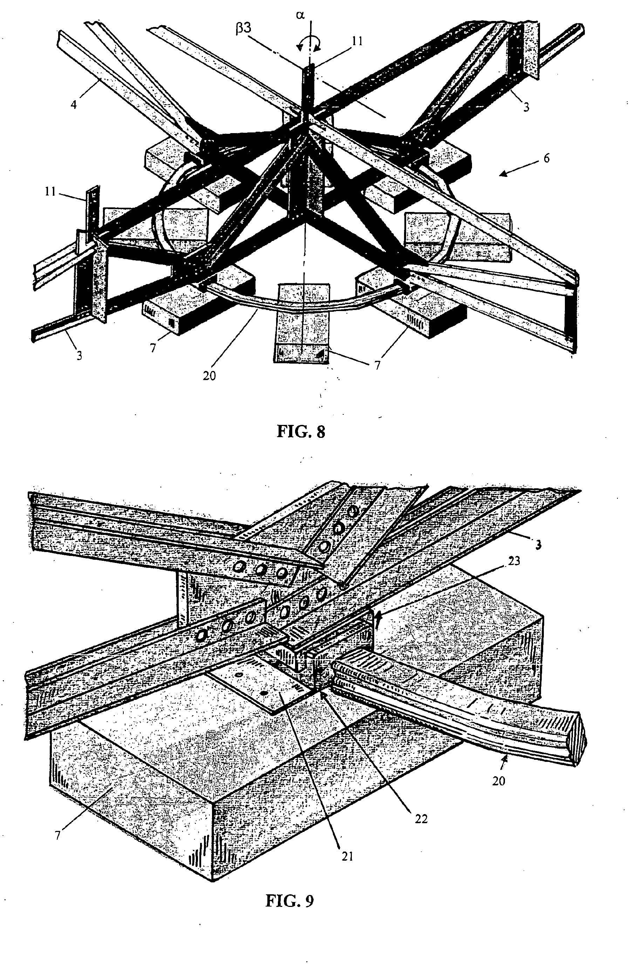

Referring now to next figures 7, 8, and 9, it will be described in greater detail the second kinematic subsystem, referred to as "circular kinematic motion".

The second moving means comprises first of all a circular track 20 anchored to the support elements 7 constituting the base 6. Such anchoring may occur, e.g., by means of plates 21, brackets and metal supports, according to techniques certainly within the reach of a person skilled in the art.

On the circular track 20 there may slide, e.g. thanks to systems with bearings, a plurality of slides 22. Preferably, an apparatus according to the present invention provides at least four slides 22.

Each slide 22 serves in turn as support for the entire load-bearing structure 1 that is integrally connected thereto, for instance through further supports 23, preferably at the main beam 3 and the central ordinate beam.

The second moving means further comprises a second actuator, e.g. a rotary or linear AC or DC electric motor that, connected to the structure and/or to the circular track, allows to control the rotation of the structure with respect to the base.

Preferably, the circular kinematic motion should allow a rotation of the load-bearing structure about axis α of an angle comprised in the range (0°-360°), both clockwise and counter clockwise.

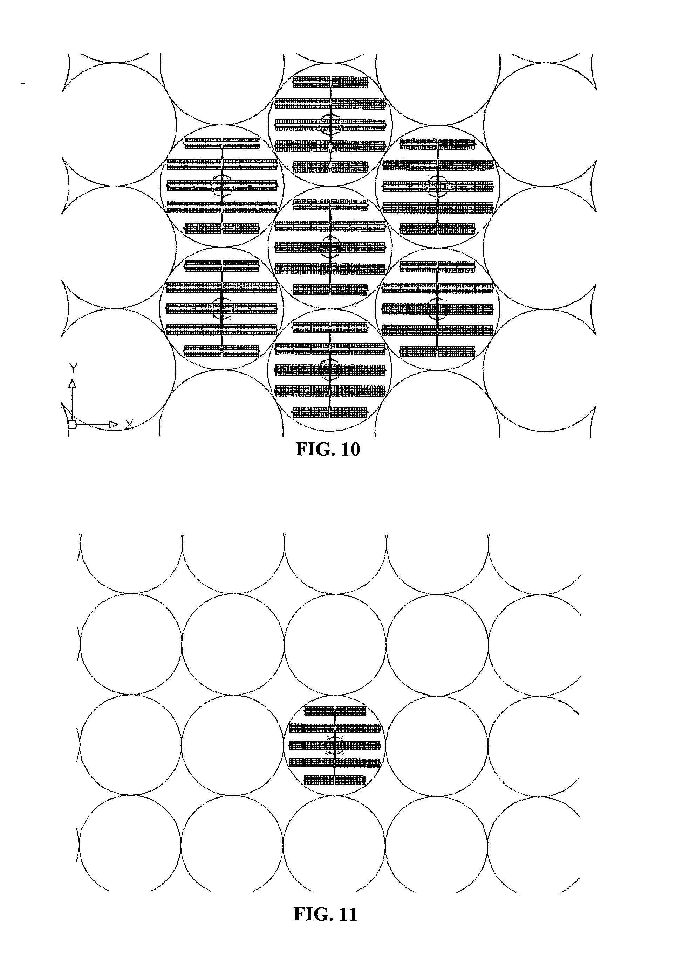

Figures 10 and 11 refer to some installing options for apparatuses according to the present invention.

In particular, first of all it should be understood that an apparatus according to the present invention can always be installed in a "scattered" form, i.e. by arranging, where needed, individual units, without reproducing any specific geometrical arrangement.

A scattered installation offers the option of installing "stand alone" islands to be used on uneven grounds with marked variations in inclines, where it is possible to make small terraces only.

Alternatively, to make larger-sized installations, when ground morphology allows it, a plurality of apparatuses according to the present invention may be installed according to different geometries, in order to build installations in which ground space occupation is optimised and/or the mechanical and/or electrical connections among the various units of the installation be simplified and made more efficient.

More specifically, figure 10 refers to a honeycomb installation on plane ground. The honeycomb mounting optimises the spaces occupied by the installation, minimising empty spaces so as to maximise the number of panels to be installed per surface unit, on plane or hilly grounds having slight inclines.

Figure 11 refers instead to an installing by rows and columns, always on plane ground. An installing by rows and columns optimises the electrical installation stage, by minimising the distances for connecting the individual islands to be used on plane or hilly grounds having slight inclines.

Finally, it has to be observed that the apparatuses according to the present invention also meet advanced and particularly interesting functionalities, a brief description of which is provided hereinafter.

The dual-axis circular plane follower according to the present invention is designed so that, without the motor braking (e.g., by having disengaged a clutch), by effect of gravity the panel support frames automatically position at 0° with respect to the land surface, whereas the problem of having to position the lattice structure does not exist, as said structure is always in a condition of lesser wind-exposed surface. Therefore, also in case of malfunctioning, the follower altogether assumes the configuration of a fixed installation.

The dual-axis circular plane follower is structured so as to connect in parallel and/or in series to other followers of the same type, through a system of zinc-plated metal bars serving as wire ducts, besides as connecting bars, rigidly connected to the follower and to the bars themselves through zinc-plated pins and nuts. The result of the wiring harness is that of a network of metal pipes, all interconnected thereamong and to the upstruts of the followers.

The in series electrical connection among the panels is made by positioning an IP65 box in proximity to each bearing, running a wire box-to-box inside of the (main and ordinate) lattice beams (trusses) constituting the lattice structure of the follower. The system of one island connects to the successive island with a wire that, by running inside the connecting bars among islands, ends up into the box of the successive island. Thus, all necessary islands can be coupled in series. The wire returning to the first island is always harnessed in the zinc-plated connecting bars. The disconnecting and protection board is installed on the metal column of the follower of the first island from which the wiring harness started. The result is that there are no visible external wires, besides from having a saving in the costs of corrugated pipe laying, chases excavation, and in the time for the installing and the signalling of buried wires, etc.

Grounding is performed by means of a wired metal mesh that is ohmically interconnected, extends on the entire surface of the installation and rests on the ground. This feature allows to eliminate about 90% of the cost for making the grounding system. In fact, the sole costs concern the number of pile shoes and sumps to be installed on the ground, one per island.

Moreover, the peculiar structure of the wired mesh of the followers eliminates all costs for the making and installing of a lighting conductor system, with the exception of the dischargers. In fact, the wired metal mesh, ohmically connected to earth and interconnected to the metal frame of the follower, constitutes a Faraday cage extended to the entire installation. This feature, specific of the mesh type, guarantees the maximum viable protection to the installed wires and apparatuses, without the adoption of any other apparatus or installation.

The present invention has hereto been described with reference to a preferred embodiment thereof. It is understood that other embodiments might exist, all falling within the concept of the same invention, and all comprised within the protective scope of the claims hereinafter.

## Claims

1. A sun-tracking photovoltaic apparatus comprising:
• A support base (6), lying on a land surface;
• a main load-bearing structure (1), rotatably connected to said base (6);
• at least one photovoltaic panel (2), rotatably connected to said load-bearing structure (1);
• first means for moving said at least one photovoltaic panel (2) apt to produce a first rotary motion thereof with respect to said load-bearing structure (1);
• second moving means apt to produce a second rotary motion of said load-bearing main structure (1) with respect to said base (6),
**characterised in that** said first and second rotary motion are carried out along different axes of rotation (α, β1, β2, β3, β4, β5), tilted thereamong.

2. The photovoltaic apparatus according to claim 1, wherein said load-bearing main structure (1) is made in a lattice form, apt to support said at least one photovoltaic panel (2).

3. The photovoltaic apparatus according to claim 1 or 2, wherein said load-bearing main structure (1) comprises at least one longitudinal beam (3).

4. The photovoltaic apparatus according to claim 3, wherein said at least one longitudinal beam (3) is made as a trellis structure.

5. The photovoltaic apparatus according to claim 3 or 4, wherein said load-bearing main structure (1) comprises one or more transverse beams (4), mounted on said at least one longitudinal beam (3) and arranged along a direction substantially transversal to that of the longitudinal beam (3).

6. The photovoltaic apparatus according to claim 5, wherein said transverse beams (4), are in number, length and arrangement such that, on a plan, the structure assumes overall a substantially circular shape.

7. The photovoltaic apparatus according to claim 5 or 6, wherein said one or more transverse beams (4) is made as a trellis structure.

8. The photovoltaic apparatus according to one of the claims 4 to 7, further comprising support frames (5) for the photovoltaic solar panels (2), said frames (5) being supported by said transverse beams (4) and rotatably connected thereto.

9. The photovoltaic apparatus according to claim 8, wherein each transverse beam (4) supports one or more support frames (5), defining a string of panels (2).

10. The photovoltaic apparatus according to claim 9, wherein on each transverse beam (4), the respective string of solar panels (2) is mounted on one or more pair of columns (11), integral to the transverse beam (4), so that the respective support frames may rotate about a transversal axis (β1, β2, β3, β4, β5), substantially parallel to the transverse beam (4) itself.

11. The photovoltaic apparatus according to claim 10, wherein the frames (5) constituting each string are rigidly connected thereamong, in a manner such as to assume all a same orientation.

12. The photovoltaic apparatus according to claim 10 or 11, wherein said first moving means further comprises a linkage system (15, 16) that, operated, allows to concomitantly rotate all strings of the structure about the respective axes of rotation (β1, β2, β3, β4, β5).

13. The photovoltaic apparatus according to claim 12, wherein said linkage system comprises a bar (15) traversing the entire structure (1) along a longitudinal direction and that can slide along said direction, in both senses.

14. The photovoltaic apparatus according to claim 13, wherein said linkage system comprises a plate (16) for connecting to said bar (15), at each transverse beam (4), integral to the string of solar panels (2), said bar (15) being rotatably connected to the plate (16), at a predetermined distance (L) from the corresponding transversal axis of rotation (β1, β2, β3, β4, β5).

15. The photovoltaic apparatus according to one of the claims 12 to 14, wherein said first moving means further comprises a first actuator, integrally connected to the load-bearing structure, apt to control said linkage system (15, 16).

16. The photovoltaic apparatus according to one of the claims 12 to 15, wherein said linkage system (15, 16) connects thereamong all panel support frames and imposes thereto a same rotation that may range from +60°to -60°, about their longitudinal axis (β1, β2, β3, β4, β5).

17. The photovoltaic apparatus according to one of the claims 1 to 16, wherein said second moving means comprises a circular track (20), anchored to said base (6) and on which there may slide a plurality of slides (22), said plurality of slides (22) being apt to support the entire load-bearing structure (1) to which it is integrally connected.

18. The photovoltaic apparatus according to claim 17, wherein said second moving means further comprises a second actuator, connected to the structure and/or to the circular track, and apt to control the rotation of the load-bearing structure (1) on the track (20), with respect to the base (6).

19. The photovoltaic apparatus according to claim 18, wherein the arrangement is such as to allow a rotation of the load-bearing structure (1) about axis (α) of an angle comprised in the range (0°-360°), both clockwise and counter clockwise.

20. The photovoltaic apparatus according to one of the preceding claims, wherein said axis of rotation (α) passes through the centre of gravity of the load-bearing structure (1) and is substantially orthogonal to each of said axes of rotation (β1, β2, β3, β4, β5), said axis of rotation (α) being substantially orthogonal to said land surface, each of said axes of rotation (β1, β2, β3, β4, β5) being substantially parallel to said land surface.

21. An installation for the production of electric power, **characterised in that** it comprises a plurality of photovoltaic apparatuses according to any one of the preceding claims, said photovoltaic apparatuses being mechanically and/or electrically interconnected thereamong.
